# EUROPEAN PATENT SPECIFICATION

(11) **EP 2 052 909 B1**
(45) Date of publication and mention of the grant of the patent: **21.05.2014**
(21) Application number: 08253213.6
(22) Date of filing: 02.10.2008
(51) Int. Cl.: B60Q 1/00, B62J 6/02, F21S 8/12, F21V 7/00, F21W 101/027, F21Y 101/02

(54) **Lamp fitting for vehicle and vehicle mounted with the same**
Lampenfassung für ein Fahrzeug und Fahrzeug damit
Fixation de phare pour véhicule et véhicule doté de celle-ci

(30) Priority: 03.10.2007 JP 2007260334
(43) Date of publication of application: 29.04.2009
(73) Proprietor: Yamaha Hatsudoki Kabushiki Kaisha, Iwata-shi, Shizuoka 438-8501 (JP)
(72) Inventor: Sasanami, Kazumasa, Tokyo 171-0033 (JP); Shimizu, Yoshiro, Tokyo 171-0033 (JP)
(74) Representative: Moreland, David

(56) References cited:
- WO-A1-2004/106113
- DE-A1- 10 160 052
- DE-A1- 10 336 974
- DE-U1-202004 017 157
- US-A1- 2006 002 126
- US-A1- 2006 232 987

## Description

### FIELD OF THE INVENTION

The present invention relates to a lamp fitting for a vehicle and a vehicle mounted with the lamp fitting.

### BACKGROUND TO THE INVENTION

A motorcycle is known which uses a light emitting diode as a lamp fitting thereof. JP-A-2004-95480 describes one example of such a motorcycle. In this motorcycle, a plurality of lamp units are built in a head lamp for a vehicle, has and a reflector is disposed rearward of the light emitting diode. Light emitted from the light emitting diodes can be reflected by the single reflector and can be passed through a forward transparent plate and can be directed forward.

In the lamp unit of the above-mentioned type, the reflector is provided in as a single member. On the other hand, the structure of the lamp unit can be applied to a head lamp by itself but cannot respond to a demand for reducing the weight of the lamp fitting if the reflector is held built-in as a single member.

The present invention has been completed in view of the above-mentioned circumstances. The object of the present invention is to provide a lamp fitting for a vehicle capable of reducing its weight and a vehicle mounted with the lamp fitting.

US2006/002126 describes a rear combination lamp comprising a lamp body, wherein a pair of upper and lower lateral partitions are formed so as to demarcate a high-level region, an intermediate-level region and a lower-level region, each extending in the lateral direction within a lamp chamber. Inside the lamp body, a cylindrical partition that has a cylindrical shape is provided substantially at the centre of the intermediate-level region, and is disposed so that its cylinder axis coincides with the optical axis of the lamp. Integrated with the cylindrical partition are a circumferential wall portion, a circular reflector portion, and a plurality of smaller reflectors that are circularly disposed within the cylinder circumferential wall portion. The small reflectors have a shape resembling a paraboloid of revolution and have a bottom aperture in which an LED is mounted, such that an LED is provided at the bottom of each of the small reflectors. In the specific embodiment of US2006/002126, six LEDs are mounted in a circle on a circular printed circuit board so that they match with the six small reflectors of the circular reflector portion. The printed circuit board upon which the LEDs are mounted is fixed by a stem to the back cover of the lamp chamber using screws. Each LED is provided inside the bottom apertures of the corresponding small reflector.

DE10336974 describes a signal lamp that comprises a central lighting unit whose optical axis coincides with the central axis of the lighting unit, and a plurality of side light units provided around a peripheral edge of the main lighting unit, wherein each of the side light units comprises a housing with a cup-shaped reflector, an LED arranged at an apex of the reflector and a cover. The transverse dimensions of the main light unit are much larger than the transverse dimension of the side light units.

In an embodiment described in WO2004/106113, there is provided a lighting device for a motor vehicle (in particular a tail light) in which a plurality of LEDs are provided in two concentric rings. The light unit comprises a first light emitting module that is substantially cylindrical. The first light emitting module is surrounded by a second light emitting module that comprises a plurality of light emitting diodes arranged in a circle. The second light emitting module surrounds the first light emitting module concentrically, and is provided rearwardly of the first light emitting module. The second light emitting module includes an inner reflector surface which constitutes a cylindrical wall of the first light emitting module and a radially outer side of the second light emitting module has a reflector surface. The reflecting surfaces of the second light emitting module form honeycomb recesses, each of which contain a light emitting diode. The LEDs are mounted on an annular board. The two light emitting modules are interlocked but are separable so that it is possible to separately replace each light emitting module

### SUMMARY OF THE INVENTION

Various aspects of the present invention are defined in the independent claims. Some preferred features are defined in the dependent claims.

Described herein is a lamp fitting, comprising:
a lamp housing adapted to be mounted on a vehicle body;
a plurality of semiconductor light emitting devices mounted in the lamp housing; and
a plurality of reflectors arranged in correspondence with the respective semiconductor light emitting devices to reflect light emitted from the respective semiconductor light emitting devices.

The lamp fitting further comprises a main light source unit arranged in a center portion of the lamp housing. The main light source is adapted to generate a light distribution pattern different from that of the respective semiconductor light emitting devices.

The respective semiconductor light emitting devices and the respective reflectors may be arranged at radial positions around the main light source unit.

The main light source unit is supported by a stay extending toward an inner surface of the lamp housing from said unit, the stay being arranged forward of the reflectors. The stay may be arranged between adjacent reflectors.

The main light source unit may have a fixing ring disposed at a position surrounding an outer periphery thereof. The fixing ring may be adapted for mounting the respective semiconductor light emitting devices.

The fixing ring may have the respective reflectors mounted thereon. The respective reflectors may be disposed further rearward than the respective semiconductor light emitting devices in such a way as to be opposite to the respective semiconductor light emitting devices.

The fixing ring may be supported by the stay and may be arranged separately from an outer peripheral surface of the main light source unit.

The lamp housing may have a mounting part fixed thereto so as to extend rearward of the vehicle. The mounting part may be adapted to support the lamp housing and may have an end portion connected to a handlebar supporting part for a handlebar for steering the vehicle.

The lamp fitting may define a head lamp for a vehicle. The lamp fitting may define a tail lamp for a vehicle.

According to the present invention, the reflectors are built in the lamp housing in a state where the reflectors are divided into plural parts in correspondence with the respective semiconductor light emitting devices. Thus, as compared with a case where the reflector is constructed of a single member, the weight of the entire lamp fitting can be reduced. Moreover, the reflectors are formed of plural divided parts, so that a unique setting such as the changing of a reflection angle can also be made on the individual reflectors.

Described herein is a vehicle comprising a lamp fitting as described above.

### BRIEF DESCRIPTION OF THE DRAWINGS

These and other aspects of the present invention will now be described, by way of example only, with reference to the accompanying drawings, in which:
Fig. 1 is a side view of a motorcycle;
Fig. 2 is a front view to show the vicinity of a head light;
Fig. 3 is a section view to show the vicinity of the head light;
Fig. 4 is a plan view to show a portion in which the head light is mounted; and
Fig. 5 a perspective view to show an entire tail lamp.

### DETAILED DESCRIPTION OF THE DRAWINGS

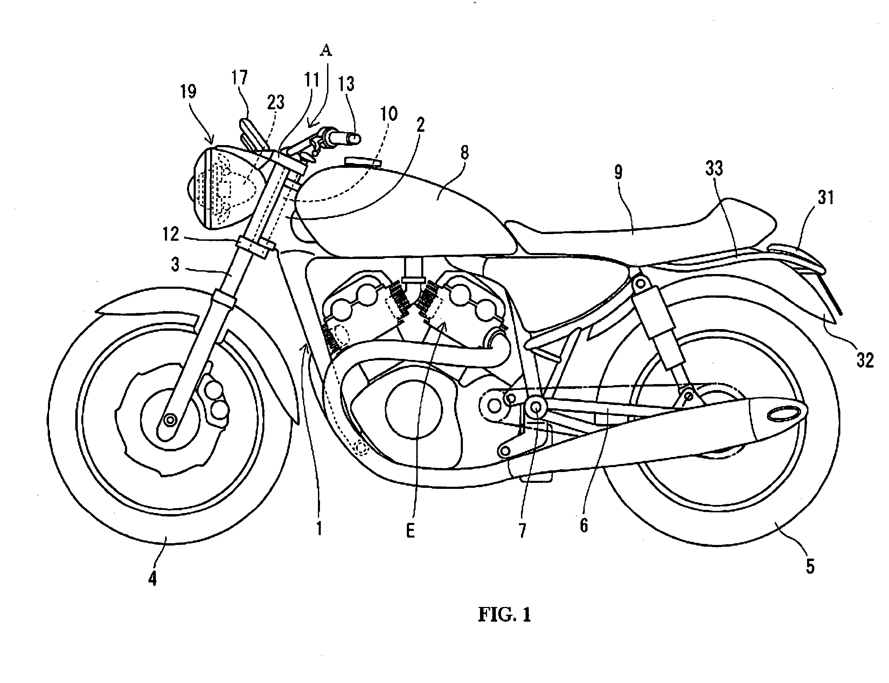

An embodiment of the present invention will be described with reference to Fig. 1 to Fig. 5. As shown in Fig. 1, a motorcycle according to the present invention has an air-cooled V-type engine E mounted in a vehicle body frame 1. The vehicle body frame 1 has a head pipe 2 fixed to a front end portion thereof. The head pipe 2 has a steering device A fixed thereto, and a pair of front forks 3, 3 disposed in the steering device A have a front wheel 4 fixed to lower end portions thereof. The vehicle body frame 1 has a rear arm 6 fixed to a pivot shaft 7 in a rear lower portion thereof, the rear arm 6 supporting a rear wheel 5 and being able to turn around the pivot shaft 7. The vehicle body frame 1 has a fuel tank 8 mounted on an upper front side thereof and has a seat 9 arranged rearward of the fuel tank 8.

The steering device A includes: a handlebar shaft 10 rotatably passed through the head pipe 2 via a bearing; upper and lower brackets 11, 12 fixed to the upper and lower end portions of the handlebar shaft 10; a handlebar 13 fixed to the top of the upper bracket 11; and the above-mentioned front forks 3, 3. Of these parts, both of the front forks 3, 3 are passed through the lower bracket 12 in the middle in the direction of length thereof and have their upper end portions fixed to the upper bracket 11.

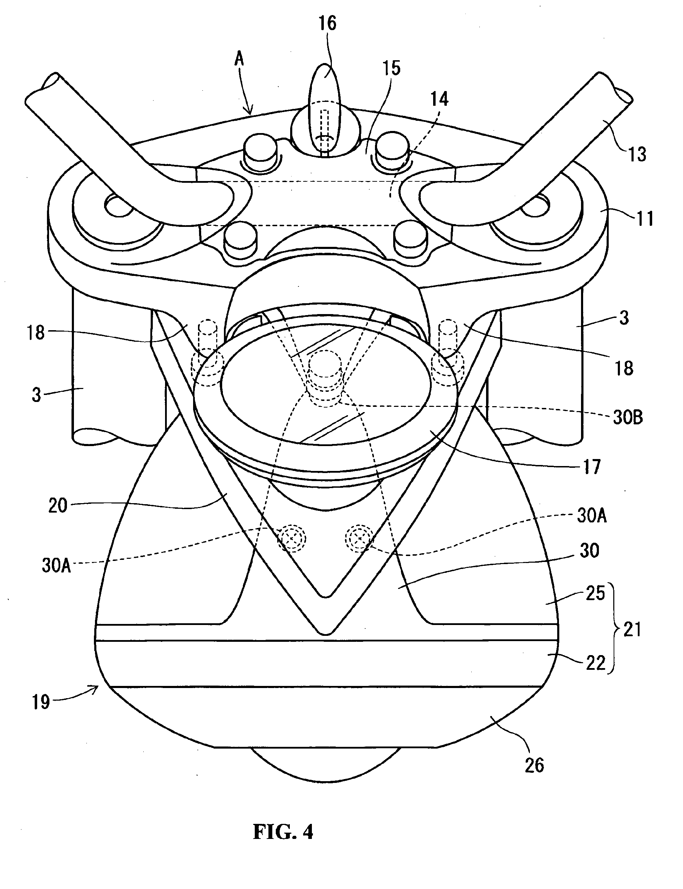

As shown in Fig. 4, the upper bracket 11 has its upper surface gouged in the shape of a circular cross section along a vehicle width direction, thereby having a handlebar receiving groove 14 formed on the upper surface. Thus, the upper bracket 11 can have the bottom surface side of the center portion of the handlebar 13 fitted in the handlebar receiving groove 14. The upper bracket 11 has a handlebar holder 15 fixed to the upper surface thereof by bolts in a state where the handlebar 13 is fitted in the handlebar receiving groove 14. With this, the handlebar 13 is pinched by the upper bracket 11 and the handlebar holder 15 and is fixed in a state where the handlebar 13 is stopped from rotating. In this embodiment, the upper bracket 11 has an ignition key 16 mounted at a position directly above the handle shaft 10 on the upper surface thereof, the ignition key 16 starting or stopping the engine E.

A speedometer 17 (in this embodiment, also acting as a tachometer for displaying the revolution speed of the engine E) supported by the upper bracket 11 is arranged forward of the upper bracket 11 and in the center portion in the vehicle width direction. A pair of holding portions 18, 18 are disposed at positions nearly sandwiching the speedometer 17 in the vehicle width direction on the front edge of the upper bracket 11. The pair of holding portions 18, 18 have a lamp holding part 20 (that constructs a handlebar supporting part along with the upper bracket 11) fixed thereto, the lamp holding part 20 being formed of metal material having excellent thermal conductivity for holding a head lamp 19. The lamp holding part 20 is formed nearly in a pointed shape like an arrowhead, and the head lamp 19 is supported in a suspended state by the front end portion of the lower surface of the lamp holding part 20. The entire supporting structure of the head lamp 19 will be described anew later.

The head lamp 19 is constructed of a projector lamp 23 as a main light source unit and a plurality of LED units 24, the projector lamp 23 and the plurality of LED units 24 being stored in a lamp housing 21. The lamp housing 21 is constructed of a front frame 22 made of metal in the shape of a ring (for example, made of aluminum die casting) and a rear cover 25 made of synthetic resin and fixed to the rear side of the front frame 22. A transparent plate 26 is fitted in the front opening of the front frame 22, whereas the rear cover 25 is formed in the shape of a cup contracted rearward. Here, in this embodiment, the rear cover 25 has its nearly entire area formed of transparent material through which the interior structure of the lamp housing 21 can be seen.

The projector lamp 23 has a nearly cylindrical lamp body 23A arranged along a central axis of the lamp housing 21. The projector lamp 23 is of the type in which light from a light source (for example, a xenon lamp, not shown) stored therein is directly projected forward. The projector lamp 23 is set for a low beam in this embodiment.

The projector lamp 23 has many fins 23B arranged on the entire periphery of the outer peripheral surface of the lamp body 23A thereof. Each of the fins 23B is arranged in a projecting manner from a position closer to the front end portion of the lamp body 23A to a rear end portion thereof along the front and rear direction. The lamp body 23A has a total three stays 27 formed at positions closer to the front end of a region in which the fins 23B are arranged on the outer peripheral surface thereof, the three stays 27 being arranged at equal angle intervals so as to extend along a radial direction. Each of the stays 27, like the lamp body 23A, is integrally formed of metal material having excellent heat radiation and has its tip portion connected to the inner peripheral surface of the front frame 22.

A fixing ring 28 is arranged rearward of the respective stays 27 so as to surround the entire periphery of the lamp body 23A. The fixing ring 28 is connected to the root portions of the respective stays 27. With this, the fixing ring 28 is supported at a position separate outside in a radial direction from the front ends in the radial direction of the fins 23B of the lamp body 23A. The fixing ring 28 is formed of metal material having excellent heat radiation in the shape of a ring and has six LED units 24 arranged at equal angle intervals on its rear surface. Each of the LED units 24 has a construction such that an LED chip covered by a cap is placed on a substrate (thermal conductive insulating substrate, for example, made of ceramic).

The fixing ring 28 has also reflectors 29 (for example, made of polycarbonate) of the same number as the LED units 24 fixed at positions corresponding to the respective LED unit 24 on the rear surface thereof. In this manner, in this embodiment, the entire area at the depth of the inner surface of the rear cover 25 is not set as a single reflector 29, but the plural reflectors 29 are arranged in a divided manner for the respective LED units 24. Each of the reflectors 29 is formed of: a connection base portion 29A connected to the rear surface of the fixing ring 28; and a reflector plate 29B erected nearly outward in the radial direction from the connection base portion 29A. The reflector plate 29B has its width made wide on the connection base portion 29A side and gradually narrower toward its tip side. Moreover, the reflector plate 29B has its front side portion curved at a curvature so as to further protrude forward with an increase in a distance from the connection base portion 29A side to the tip side. The reflector plate 29B has plural reflective surfaces formed stepwise on the front surface thereof. In this manner, light emitted from the LED unit 24 is reflected by the front surface of the reflector plate 29B corresponding to the LED unit 24 and is passed through the transparent plate 26 and is directed forward of the vehicle. In this embodiment, the respective LED units 24 are set for a high beam.

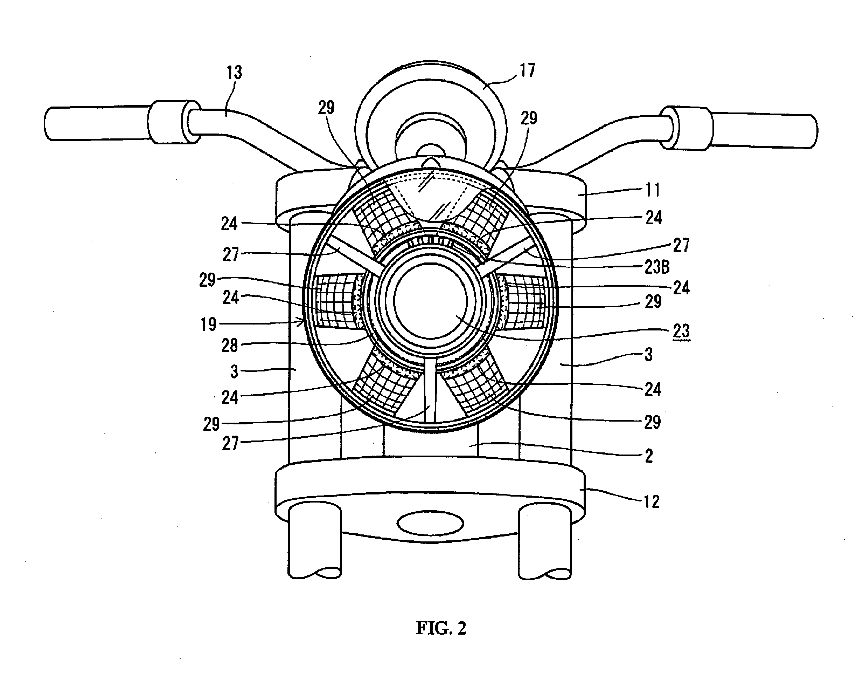

Moreover, as shown in Fig. 2, the respective stays 27 are arranged between the adjacent reflectors 29 when the vehicle is viewed from the front. This can make it possible to avoid the trouble that light emitted from the each LED unit 24 is interrupted by the stay 27.

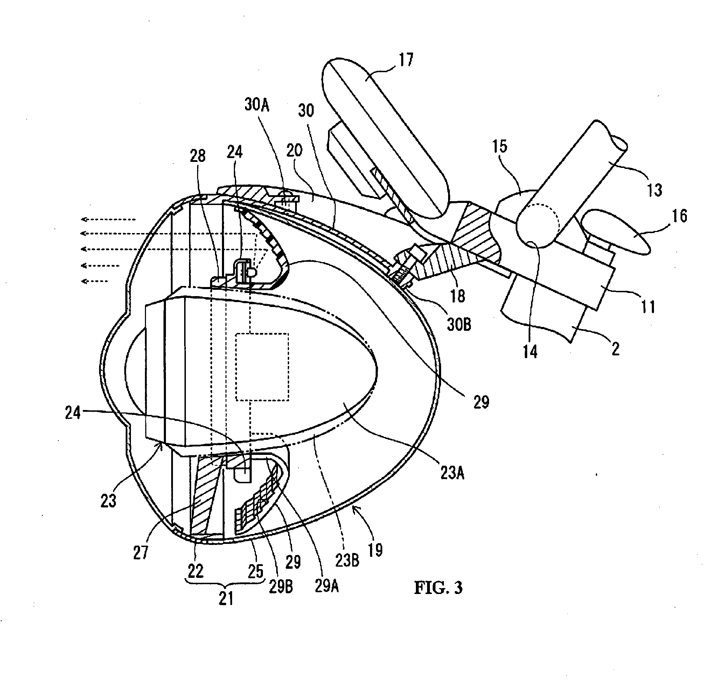

A structure for supporting the entire head lamp 19 by the lamp holding part 20 will now be described. A mounting part 30 is integrally extended rearward from the upper portion of the front frame 22. The mounting part 30 has its width made wide on the side connected to the front frame 22 and narrower toward a rear side thereof. Moreover, the mounting part 30 is formed in a shape curved nearly along the outer surface of the rear cover 25. The mounting part 30 has boss portions 30A, 30B arranged on its upper surface, the boss portions 30A, 30B being connected to the lamp holding part 20. As to the respective boss portions 30A, 30B, as shown in Fig. 3, two boss portions 30A are disposed in parallel in a vehicle width direction in the center portion in the front and rear direction of the mounting part 30, and one boss portion 30B is disposed in the rear end portion of the mounting part 30. Each of the boss portions 30A, 30B is formed in the shape of a circular disk and is protruded upward. The respective boss portions 30A, 30B can have bolts fastened thereinto from the lamp holding part 20. Of the respective boss portions 30A, 30B, the boss portion 30B arranged in the rear end portion of the mounting part 30 is protruded also to a lower surface side and abuts against the outer surface of the rear cover 25. With this, the mounting part 30 has a clearance held between itself and the outer surface of the rear cover 25, which can enhance a heat radiation function by the mounting part 30.

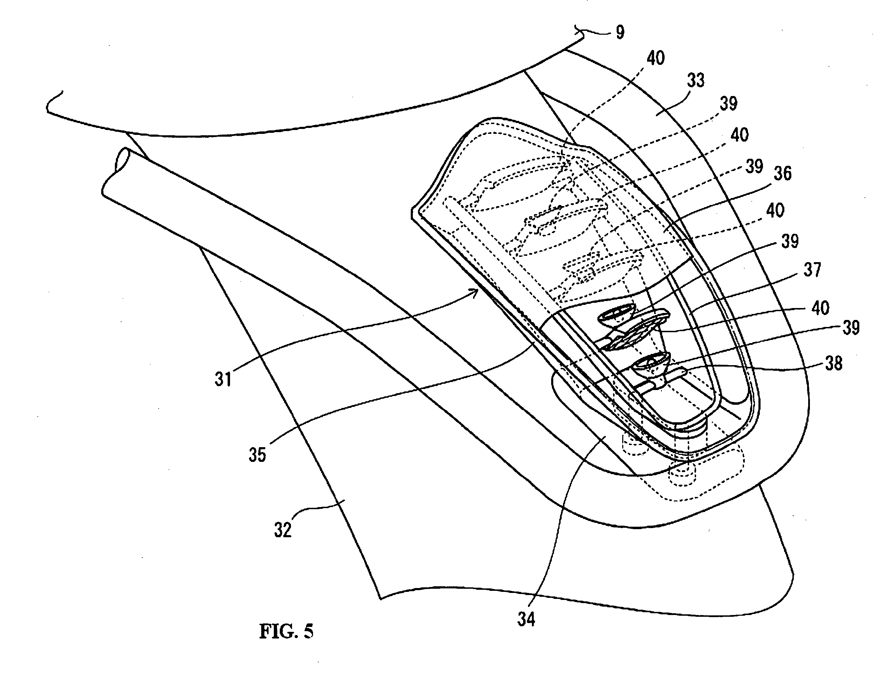

Finally, the structure of a tail lamp 31 will be described with reference to Fig. 5. The seat 9 has a lamp frame 33 arranged downward thereof in such a way that the lamp frame 33 surrounds the upper portion of a rear fender 32. The lamp frame 33 has its entire shape formed nearly in the shape of a letter U and has both end portions connected to the vehicle body frame 1. The lamp frame 33 is extended rearward nearly in a horizontal position and has a lamp supporter 34 disposed inside a folding-back portion at the rear end thereof. The tail lamp 31 has its rear end portion fixed by this lamp supporter 34 and has its front end side supported in the manner of a cantilever in a state to be separated from the outer surface of a rear fender 32 and in a position projected obliquely forward and upward.

The tail lamp 31 has a lamp housing 35 elongated in the front and rear direction. The lamp housing 35 is formed in the shape of a shallow plate and has a transparent plate 36 fitted on its upper surface. The lamp housing 35 has an inner housing 37 disposed therein and has a plurality of support parts 38 disposed inside the inner housing 37, the support parts 38 being disposed respectively between walls opposite in the vehicle width direction at equal intervals in the front and rear direction. The support parts 38, except for one support part 38 positioned at the most forward position in the front and rear direction of the vehicle (one support part 38 positioned at the highest position in the direction of height), have LED units 39 fixed thereto, respectively. Each of the LED units 39 is fixed in the center portion in the vehicle width direction of each of the support parts 38 in such a way that the light emitted from the LED is directed to a reflector 40 disposed obliquely forward and upward. Each of the reflectors 40, except for one reflector 40 positioned at the most rearward position in the front and rear direction of the vehicle (one reflector 40 positioned at the lowest position in the direction of height), is formed nearly over the entire range of the support part 38. However, the inner housing 37 has its inside width made wider toward the front side of the vehicle (toward an upper side in the direction of height), so that also the reflectors 40 have their widths made wider as their heights become larger.

As described above, also in the tail lamp 31, a single reflector is not arranged as the reflector 40 in the entire area of the inner housing 37, but the plural reflectors 40 are arranged in the divided manner. In this manner, in this embodiment, in the head lamp 19 and the tail lamp 31, the reflectors 40 arranged in the lamp housing 35 are not made a single member common to all of the LED units 39, but the reflectors 40 are divided into plural members so as to individually correspond to the respective LED units 39. Thus, the weight of the entire lamp fitting can be reduced. In addition, the angle of reflection can also be adjusted individually for each reflector 40. Hence, for example, even if the angle of mounting (position of mounting) of the entire tail lamp 31 needs to be changed according to the type of the vehicle, the tail lamp 31 can be applied to various specifications only by adjusting the angle of reflection of each of the reflectors 40 with the angle of mounting of the tail lamp 31 itself held unchanged as it is.

The following characteristic structures can be found out from this embodiment.
(1) A lamp fitting for a vehicle is a head lamp of a vehicle, and a main light source unit in which a light distribution pattern different from a light distribution pattern by the respective semiconductor light emitting devices (LED units 24) is set is arranged in the center portion of the lamp housing 21, and the respective semiconductor light emitting devices and the respective reflectors 29 are arranged at radial positions around the main light source unit.
   According to this construction, light sources having different light distribution patterns (low beam and high beam) are mixedly disposed in the lamp housing 21, so that a desired light distribution pattern can be produced by switching these patterns. Moreover, by radially arranging the semiconductor light emitting devices, each of which is feared to be short of the quantity of light, around the main light source, a necessary number of the semiconductor light emitting devices can surely be arranged to thereby compensate the shortage of the quantity of light, and a light distribution pattern of good balance can be realized.
(2) In (1), the main light source unit is supported by the stays 27 extended toward the inner surface of the lamp housing 21 from the unit, and these stays 27 are arranged forward of the vehicle of the reflectors 29 and between the reflectors 29 arranged adjacently when the vehicle is viewed from the front. According to this construction, the stays 27 for supporting the main light source unit are arranged between the reflectors 29 and hence the stays 27 do not interfere with illumination.
(3) In (1), the main light source unit has the fixing ring 28 disposed at a position surrounding the outer periphery thereof, the fixing ring 28 being used for mounting the respective semiconductor light emitting devices. According to this construction, the respective semiconductor light emitting devices can collectively be supported by the fixing ring 28.
(4) In (2), the fixing ring 28 is mounted with the respective reflectors 29, and the respective reflectors 29 are disposed further rearward of the vehicle than the respective semiconductor light emitting devices so as to be opposite to the semiconductor light emitting devices. According to this construction, the semiconductor light emitting devices and the reflectors 29 share the support member for them, so that the structure of the interior of the lamp housing 21 can be made simple.
(5) In (3), the fixing ring 28 is supported by the stays 27 and is arranged separately from the outer peripheral surface of the main light source unit. According to this construction, the fixing ring 28 is positioned separately from the outer peripheral surface of the main light source unit, so that heat generated by the main light source unit is less easily transmitted to the semiconductor light emitting devices.
(6) In (2) , the lamp housing 21 has the mounting part 30 fixed thereto so as to extend rearward of the vehicle, the mounting part 30 supporting the lamp housing 21 and having its end portions connected to handlebar supporting parts (lamp holding part 20, the upper bracket 11) for a handlebar 13 for steering the vehicle.

According to this construction, the heat generated in the lamp housing 21 is transmitted from the stays 27 to the outer surface of the lamp housing 21 and is transmitted to the handlebar supporting parts via the mounting part 30, so that the heat can effectively be dissipated while the heat is transmitted via a heat transmission path.

The present invention is not limited to the embodiment described above with reference to the drawings, but for example, also the following embodiments can be included within the technical scope of the present invention as defined by the appended claims. Further, the present invention can be modified into various embodiments other than the following embodiments within a scope not departing from the technical scope of the present invention, as defined by the appended claims.
(1) In the described embodiment, the LED units are used as the semiconductor light emitting devices, but in place of the LED units, semiconductor laser units can also be used.
(2) In the described embodiment, the mounting part 30 is connected to the upper bracket 11 via the lamp holding part 20, but the mounting part 30 may be directly connected to the upper bracket 11 without using the lamp holding part 20.
(3) In the described embodiment, the projector lamp 23 is set for the low beam and the LED units are set for the high beam, but they may be set for the light distribution patterns opposite to these.
(4) In the above-mentioned embodiment, the motorcycle has been described as one example of the vehicle mounted with the lamp fitting. However, the present invention is not limited to the motorcycle, but can be applied to other vehicles, for example, a bicycle, a three-wheeled vehicle, and ATV (All Terrain Vehicle).

### Description of the Reference Numerals

1- vehicle body frame
11- upper bracket (handlebar supporting part)
19- head lamp
20- lamp holding part (handlebar supporting part)
21, 35- lamp housing
22- front frame
23- projector lamp
24, 39- LED unit
27- stay
28- fixing ring
29, 40- reflector

## Claims

1. A lamp fitting for a vehicle, comprising:
a lamp housing (21) adapted to be mounted on a vehicle body (1);
a plurality of semiconductor light emitting devices (24) mounted in the lamp housing (21);
a plurality of reflectors (29) arranged in correspondence with the respective semiconductor light emitting devices (24) to reflect light emitted therefrom;
a main light source unit (23) arranged in a centre portion of the lamp housing (21), the main light source unit (23) being adapted to generate a light distribution pattern different from that of the respective semiconductor light emitting devices (24), wherein the main light source unit (23) is supported by a stay (27) extending in a radial direction and forwardly of the reflectors (29) to an inner surface of the lamp housing (21) from said unit (23).

2. The lamp fitting as claimed in claim 1, wherein the respective semiconductor light emitting devices (24) and the respective reflectors (29) are arranged at radial positions around the main light source unit (23).

3. The lamp fitting as claimed in claim 1 or claim 2, wherein the stay (27) is arranged between adjacent reflectors (29).

4. The lamp fitting as claimed in any preceding claim, wherein the main light source unit (23) has a fixing ring (28) disposed at a position surrounding an outer periphery thereof, the fixing ring (28) being adapted for mounting the respective semiconductor light emitting devices (24).

5. The lamp fitting as claimed in claim 4, wherein the fixing ring (28) has the respective reflectors (29) mounted thereon, the respective reflectors (29) being disposed further rearward than the respective semiconductor light emitting devices (24) in such a way as to be opposite to the respective semiconductor light emitting devices (24).

6. The lamp fitting as claimed in claim 1 and 4, wherein the fixing ring (28) is supported by the stay (27) and is arranged separately from an outer peripheral surface of the main light source unit (23).

7. The lamp fitting as claimed in any preceding claim, wherein the lamp housing (21) has a mounting part (30) fixed thereto so as to extend rearward of the vehicle, the mounting part (30) adapted to supporting the lamp housing (21) and having a portion connected to a handlebar supporting part (11) for a handlebar for steering the vehicle.

8. The lamp fitting as claimed in any preceding claim, wherein the lamp fitting defines a head lamp (19) for a vehicle.

9. The lamp fitting as claimed in any preceding claim, wherein the lamp fitting defines a tail lamp (31) for a vehicle.

10. A vehicle comprising a lamp fitting as claimed in any preceding claim.

## Patentansprüche

1. Lampenfassung für ein Fahrzeug, die umfasst:
ein Lampengehäuse (21), das so ausgebildet ist, dass es an einer Fahrzeugkarosserie (1) montiert werden kann;
eine Vielzahl von Halbleiterlichtemissionsbauelementen (24), die im Lampengehäuse (21) montiert sind;
eine Vielzahl von Reflektoren (29), die in Übereinstimmung mit den jeweiligen Halbleiterlichtemissionsbauelementen (24) angeordnet sind, um das daraus emittierte Licht zu reflektieren;
eine Hauptlichtquelleneinheit (23), die in einem mittleren Abschnitt des Lampengehäuses (21) angeordnet ist, wobei die Hauptlichtquelleneinheit (23) ausgebildet ist, um ein Lichtverteilungsmuster zu erzeugen, das von dem der jeweiligen Halbleiterlichtemissionsbauelemente (24) abweicht, wobei die Hauptlichtquelleneinheit (23) durch eine Stütze (27) getragen wird, die sich in einer radialen Richtung und nach vom von den Reflektoren (29) zu einer Innenfläche des Lampengehäuses (21) von der Einheit (23) erstreckt.

2. Lampenfassung nach Anspruch 1, bei der die jeweiligen Halbleiterlichtemissionsbauelemente (24) und die jeweiligen Reflektoren (29) in radialen Positionen um die Hauptlichtquelleneinheit (23) angeordnet sind.

3. Lampenfassung nach Anspruch 1 oder Anspruch 2, bei der die Stütze (27) zwischen benachbarten Reflektoren (29) angeordnet ist.

4. Lampenfassung nach einem der vorhergehenden Ansprüche, bei der die Hauptlichtquelleneinheit (23) einen Befestigungsring (28) aufweist, der in einer Position angeordnet ist, die einen äußeren Umfang davon umgibt, wobei der Befestigungsring (28) für ein Montieren der jeweiligen Halbleiterlichtemissionsbauelemente (24) ausgebildet ist.

5. Lampenfassung nach Anspruch 4, bei der der Befestigungsring (28) die daran montierten jeweiligen Reflektoren (29) aufweist, wobei die jeweiligen Reflektoren (29) weiter nach hinten als die jeweiligen Halbleiterlichtemissionsbauelemente (24) in einer derartigen Weise angeordnet sind, dass sie den jeweiligen Halbleiterlichtemissionsbauelementen (24) entgegengesetzt sind.

6. Lampenfassung nach Anspruch 1 und 4, bei der der Befestigungsring (28) durch die Stütze (27) gestützt wird und separat von einer äußeren Umfangsfläche der Hauptlichtquelleneinheit (23) angeordnet ist.

7. Lampenfassung nach einem der vorhergehenden Ansprüche, bei der das Lampengehäuse (21) ein Montageteil (30) aufweist, das so daran befestigt ist, dass es sich vom Fahrzeug nach hinten erstreckt, wobei das Montageteil (30) ausgebildet ist, um das Lampengehäuse (21) zu tragen und einen Abschnitt aufweist, der mit einem Lenkerstützteil (11) für einen Lenker für das Lenken des Fahrzeuges verbunden ist.

8. Lampenfassung nach einem der vorhergehenden Ansprüche, bei der die Lampenfassung einen Scheinwerfer (19) für ein Fahrzeug definiert.

9. Lampenfassung nach einem der vorhergehenden Ansprüche, bei der die Lampenfassung eine Rückleuchte (31) für ein Fahrzeug definiert.

10. Fahrzeug, das eine Lampenfassung nach einem der vorhergehenden Ansprüche umfasst.

## Revendications

1. Douille de lampe pour un véhicule, comprenant :
un boîtier de lampe (21), adapté pour être monté sur une carrosserie du véhicule (1) ;
plusieurs dispositifs semi-conducteurs d'émission de lumière (24) montés dans le boîtier de la lampe (21) ;
plusieurs réflecteurs (29), agencés de manière correspondante aux dispositifs semi-conducteurs d'émission de lumière (24) respectifs, pour réfléchir la lumière émise à partir de ceux-ci ;
une unité de source de lumière principale (23), agencée dans une partie centrale du boîtier de la lampe (21), la source de lumière principale (23) étant adaptée pour établir un motif de distribution de la lumière différent de celui des dispositifs semi-conducteurs d'émission de lumière respectifs (24), dans lequel l'unité de source de lumière principale (23) est supportée par un support (27) s'étendant dans une direction radiale et vers l'avant des réflecteurs (29), vers une surface interne du boîtier de la lampe (21), à partir de ladite unité (23).

2. Douille de lampe selon la revendication 1, dans laquelle les dispositifs semi-conducteurs d'émission de lumière respectifs (24) et les réflecteurs respectifs (29) sont agencés au niveau de positions radiales autour de l'unité de source de lumière principale (23).

3. Douille de lampe selon les revendications 1 ou 2, dans laquelle le support (27) est agencé entre des réflecteurs adjacents (29).

4. Douille de lampe selon l'une quelconque des revendications précédentes, dans laquelle l'unité de source de lumière principale (23) comporte une bague de fixation (28) agencée au niveau d'une position entourant sa périphérie externe, la bague de fixation (28) étant adaptée pour le montage des dispositifs semi-conducteurs d'émission de lumière respectifs (24).

5. Douille de lampe selon la revendication 4, dans laquelle la bague de fixation (28) comporte les réflecteurs respectifs (29) qui y sont montés, les réflecteurs respectifs (29) étant agencés plus vers l'arrière que les dispositifs semi-conducteurs d'émission de lumière respectifs (24), de sorte à être opposés aux dispositifs semi-conducteurs d'émission de lumière respectifs (24).

6. Douille de lampe selon les revendications 1 et 4, dans laquelle la bague de fixation (28) est supportée par le support (27) et est agencée séparément d'une surface périphérique externe de l'unité de source de lumière principale (23).

7. Douille de lampe selon l'une quelconque des revendications précédentes, dans laquelle le boîtier de la lampe (21) comporte une partie de montage (30) qui y est fixée, de sorte à s'étendre vers l'arrière du véhicule, la partie de montage (30) étant adaptée pour supporter le boîtier de la lampe (21) et comportant une partie connectée à une partie de support de guidon (11) pour un guidon destiné à la direction du véhicule.

8. Douille de lampe selon l'une quelconque des revendications précédentes, dans laquelle la douille de lampe définit un phare (19) pour un véhicule.

9. Douille de lampe selon l'une quelconque des revendications précédentes, dans laquelle la douille de lampe définit un feu arrière (31) pour un véhicule.

10. Véhicule, comprenant une douille de lampe selon l'une quelconque des revendications précédentes.
